# EUROPEAN PATENT APPLICATION

(11) **EP 3 339 329 A1**
(43) Date of publication of application: **27.06.2018**
(21) Application number: 16206398.6
(22) Date of filing: 22.12.2016
(51) Int. Cl.: C08B 37/00, C08K 3/00

(54) **SELECTIVE OXIDATION OF MALTODEXTRIN AND ITS USE IN THE PREPARATION OF WATER-SOLUBLE IRON (III) CARBOXYMALTOSE COMPLEXES**

(71) Applicant: LEK Pharmaceuticals d.d., 1526 Ljubljana (SI)
(72) Inventor: The designation of the inventor has not yet been filed
(74) Representative: Kluschanzoff, Harald

(57) **Abstract**

The present invention relates to an efficient route of synthesis of iron (III) carboxymaltose complexes, in particular ferric carboxymaltose.

## Description

### Field of the invention

The present invention relates to an efficient route of synthesis of water-soluble iron (III) carboxymaltose complexes, in particular ferric carboxymaltose.

### Background of the invention

Water-soluble iron (III) carboxymaltose complexes are used for the prophylaxis or the treatment of iron deficiency anaemia. Ferric carboxymaltose, for instance, is used for the treatment of iron deficiency anaemia in adult patients who have intolerance to oral iron or have had unsatisfactory response to oral iron or who have non-dialysis dependent chronic kidney disease. Ferric carboxymaltose is an iron (III) oxyhydroxide carbohydrate complex with a relative molecular weight of approximately 150 kDa which consists of a ferric oxyhydroxide core stabilized by a carbohydrate shell and is defined with the following empirical formula:

[FeOₓ(OH)_{y}(H₂O)_{z}]ₙ [{(C₆H₁₀O₅)ₘ (C₆H₁₂O₇)}*ₗ*]ₖ,

where n ≈ 103, m ≈ 8, / ≈ 11, and k ≈ 4
(/ represents the mean branching degree of the ligand).
Since ferric carboxymaltose consists of different, but closely related structures that cannot be entirely characterized, it belongs to the group of non-biological complex drugs.

One route of synthesis of ferric carboxymaltose is disclosed in WO 2004/037865 A1. In said route the oxidation of maltodextrin to carboxymaltose is performed using aqueous hypochlorite solution at an alkaline pH value. It is also described that the addition of bromine ions catalyses the oxidation. Further, other well-known and previously published oxidation methods of maltodextrins are described, e.g. oxidation with alkali bromides with TEMPO system (Thaburet et al in Carbohydrate Research 330 (2001), 21-29). Finally, ferric carboxymaltose is obtained by reacting an aqueous solution of the carboxymaltose with an aqueous solution of iron (III) salt.

WO 2011/055374 A1 describes a process, in which maltodextrin is, similarly as disclosed in WO 2004/037865 A1, oxidized with sodium hypochlorite, however, ferric hydroxide is used instead of iron (III) salt in the step yielding ferric carboxymaltose.

In a process similar to the one disclosed in WO 2004/037865 A1, Indian patent application 3463/MUM/2011 describes oxidation of maltodextrin with sodium hypochlorite and subsequent reaction of the so obtained carboxymaltose with a suitable iron (III) salt to obtain ferric carboxymaltose.

Patent applications WO 2016/151367 A1 and WO 2016/181195 A1 disclose several alternative oxidation reactions of maltodextrin to yield carboxymaltose. WO 2016/181195 A1 discloses use of a non-hypohalite oxidising agent such as hydrogen peroxide or TEMPO in the presence of Starks catalyst or transition metal catalyst (sodium tungstate). Alternatively, use of organic hypohalite in the presence of sodium tungstate and PTC or organic hypochlorite in the presence of PTC and alkali halide is proposed for oxidation of maltodextrin in WO 2016/151367 A1.

Selective oxidation of some non-complex aliphatic and aromatic aldehydes to carboxylic acids with NaClO₂ - hydrogen peroxide was described in J. Org. Chem. 1986, 51, 567-569.

The object of the present invention is to provide an alternative but efficient bromine-free process for beneficially providing water-soluble iron (III) carboxymaltose complexes, in particular ferric carboxymaltose.

### Summary of the invention

The object is solved by the methods according to claims 1 and 10, while preferred embodiments are set forth in dependent claims and will be further described below.

Various aspects, advantageous features and preferred embodiments of the present invention as summarized in the following items, respectively alone or in combination, contribute to solving the object of the invention.
1. A process for the preparation of a water soluble iron (III) carboxymaltose complex, the process comprising the steps of:
   (a) providing an aqueous solution of one or more maltodextrins of formula **1** 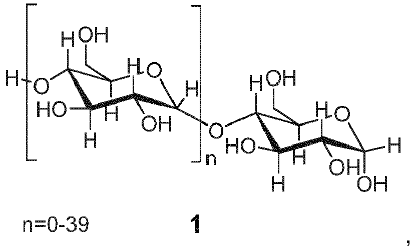 wherein the dextrose equivalent of the maltodextrin or of the mixture of the maltodextrins lies between 5 and 20,
   (b) oxidizing the obtained aqueous maltodextrin solution at pH value from 2 to 3.5 with sodium chlorite and hydrogen peroxide to obtain an aqueous solution of a C1-carboxylated maltodextrin of formula **2** 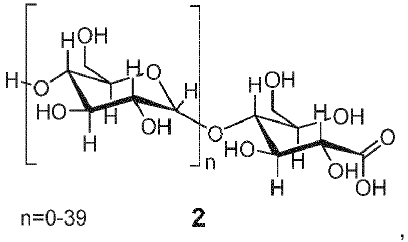
   (c) contacting the obtained C1-carboxylated maltodextrin of formula **2** with an aqueous solution of an iron (III) salt,
   (d) raising the pH value of the C1-carboxylated maltodextrin solution and iron (III) salt to a value in the range of 5 to 8, and
   (e) adding an anti-solvent to obtain a water soluble iron (III) carboxymaltose complex.
2. A process for the preparation of a water soluble iron (III) carboxymaltose complex, the process comprising the steps of:
   (a) providing an aqueous solution of one or more maltodextrins of formula **1** 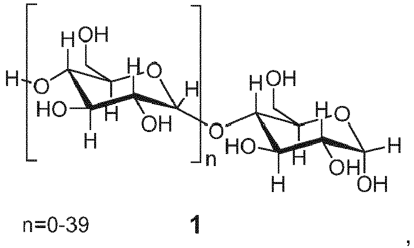 wherein the dextrose equivalent of the maltodextrin or of the mixture of the maltodextrins lies between 10 and 15,
   (b) oxidizing the obtained aqueous maltodextrin solution at pH value from 2 to 3.5 with sodium chlorite and hydrogen peroxide to obtain an aqueous solution of a C1-carboxylated maltodextrin of formula **2** 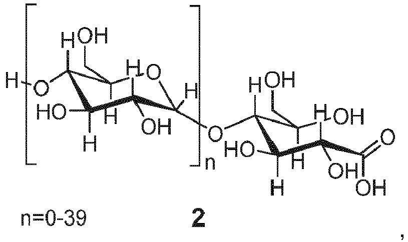
   (c) contacting the obtained C1-carboxylated maltodextrin of formula **2** with an aqueous solution of an iron (III) salt,
   (d) raising the pH value of the C1-carboxylated maltodextrin solution and iron (III) salt to a value in the range of 5 to 8, and
   (e) adding an anti-solvent to obtain a water soluble iron (III) carboxymaltose complex.
3. The process according to item 1 or 2, wherein the C1-carboxylated maltodextrin of formula **2** is not isolated.
4. The process according to item 1 or 2, wherein step (b) is carried out in the presence of buffer selected from a group consisting of NaH₂PO₄, citrate, tartrate and glycine buffer.
5. The process according to item 1 or 2, wherein step (b) is carried out at pH value of 2 and the buffer is NaH₂PO₄.
6. The process according to item 1 or 2, wherein step (b) is carried out at a temperature of from 20°C to 50°C.
7. The process according to item 1 or 2, wherein the iron (III) salt in step (c) is iron (III) chloride.
8. The process according to item 1 or 2, wherein in step (d) Na₂CO₃ is added.
9. The process according to item 1 or 2, wherein the anti-solvent in step (e) is ethanol.
10. A process for the preparation of a pharmaceutical composition comprising a water soluble iron (III) carboxymaltose complex, the process comprising the steps of:
   (x) preparing the water soluble iron (III) carboxymaltose complex by carrying out the process according to any of items 1 to 9, and
   (y) mixing said obtained water soluble iron (III) carboxymaltose complex with water and optionally with pharmaceutically acceptable additives.

### Detailed description

In the following, the present invention is described in more detail while referring to preferred embodiments and examples, which are presented however for illustrative purposes and shall not be construed to limit the invention in any way.
The present invention provides an industrially applicable, economical and environmentally friendlier (bromine-free) process for the preparation of water-soluble iron (III) oxyhydroxide carbohydrate complexes, in particular ferric carboxymaltose. The process employs selective oxidation of a maltodextrin with NaClO₂ (sodium chlorite) and H₂O₂ (hydrogen peroxide).

A first aspect of the invention is a process for providing a water-soluble iron (III) carboxymaltose complex, as depicted in Scheme 1.

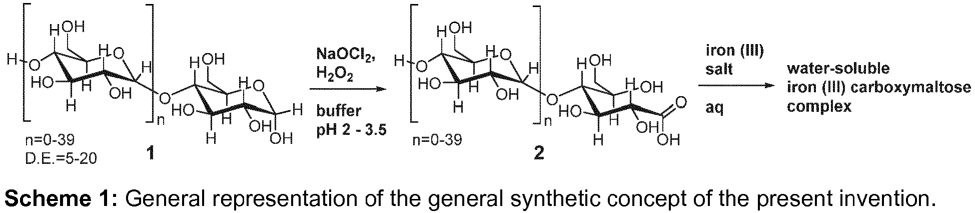

Maltodextrin of formula **1** having a dextrose equivalent (D.E.) of between 5 and 20 or a mixture of maltodextrins of formula **1** having a dextrose equivalent of between 5 and 20 is first dissolved in water. The pH of the obtained aqueous solution is then adjusted to the value of 2 to 3.5 with a suitable buffer, for example, prepared from NaH₂PO₄ and optionally HCl. After the addition of hydrogen peroxide to the buffered solution, the reaction mixture is cooled down and sodium chlorite is slowly added. Next, the obtained reaction mixture is stirred for about a day at a temperature ranging from 20°C to 50°C. An aqueous solution of iron (III) salt, for example, iron chloride, is then mixed with the solution of the obtained carboxymaltose of formula **2**, and a base, for example, Na₂CO₃, is added to the reaction mixture to adjust the pH value to 5 to 8. In the final step, the solution is first filtered through 0.2µm filter and a suitable anti-solvent, for example, ethanol, is added to precipitate the product, which is then filtered and dried, for example, under vacuum.

The compound of formula **1** is commercially available with various dextrose equivalents, and glucose number distribution (for example as Glucidex® Maltodextrin provided by Roquette).

In addition to NaH₂PO₄ buffer system, which maintains the pH of the solution at a value of 2, other suitable buffers that maintain pH in the range between 2 to 3.5, for example a citrate, a tartrate or a glycine buffer, can be used for the oxidation step of maltodextrin of formula **1** to the carboxymaltose of formula **2**.

In a specific embodiment presented in Scheme 2, ferric carboxymaltose is prepared by first oxidizing a maltodextrin of formula **1** having a dextrose equivalent of between 10 and 15 or a mixture of maltodextrins of formula **1** having a dextrose equivalent of between 10 and 15, for example a commercially available maltodextrin Glucidex 12D (Roquette), with sodium chlorite and hydrogen peroxide at pH value of 2, which is followed by contacting the obtained aqueous solution of carboxymaltose **2** with aqueous solution of an iron (III) salt, for example, iron chloride, and precipitating the solid ferric carboxymaltose with addition of an anti-solvent, for example ethanol.

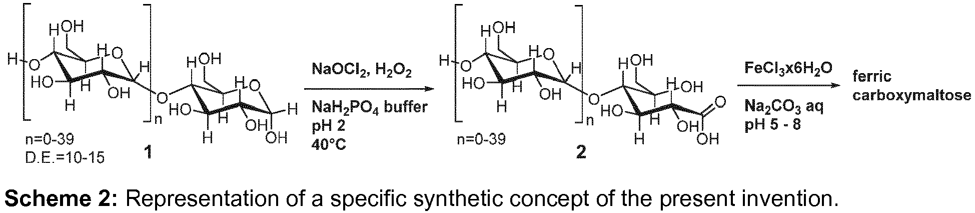

A maltodextrin of formula **1** having a dextrose equivalent of between 10 and 15 or a mixture of maltodextrins of formula **1** having a dextrose equivalent of between 10 and 15 is first dissolved in water. The pH of the obtained aqueous solution is adjusted to the value of 2 with NaH₂PO₄ and optionally HCl. After the addition of hydrogen peroxide to the buffered solution, the reaction mixture is cooled down and sodium chlorite is slowly added. Next, the obtained reaction mixture is stirred for about a day at a temperature in the range of 20°C to 50°C, preferably at about 40°C. An aqueous solution of iron (III) chloride, FeCl₃x6H₂O, is then mixed with the obtained solution of carboxymaltose of formula **2**, and a base, for example, Na₂CO₃, is added to the reaction mixture to adjust the pH value to 5 to 8. In the final step, the solution is first filtered through 0.2 µm filter and ethanol is added to precipitate ferric carboxymaltose, which is then filtered and finally dried under vacuum.

Another aspect of the invention is a process for preparing a pharmaceutical composition comprising a water-soluble iron complex, for example, ferric carboxymaltose, the process comprising the steps of carrying out the process of the invention to obtain a water-soluble iron complex, for example, ferric carboxymaltose, and mixing said obtained complex according to the invention, optionally with another active pharmaceutical ingredient, with a diluent and/or with pharmaceutically acceptable additives. In particular, it is possible to provide aqueous solutions from the complexes prepared by the process of the invention. Said aqueous solutions are particularly useful for parenteral administration.

Overall, in the present invention a new, simple synthesis of iron (III) carboxymaltose complexes, in particular ferric carboxymaltose, is provided. The oxidation of polymeric and polyhydroxylated maltodextrins with NaClO₂ - hydrogen peroxide is surprisingly very selective for C1 position, and can be performed in acidic conditions. Moreover, the process excludes the use of bromine, and thus provides cost-effective, environmentally friendly and industrially suitable synthetic process towards iron (III) carboxymaltose complexes.

### Examples

The following examples are merely illustrative of the present invention and they should not be considered as limiting the scope of the invention in any way. The examples and modifications or other equivalents thereof will become apparent to those versed in the art in the light of the present entire disclosure.

### Example 1: Selective oxidation of maltodextrin

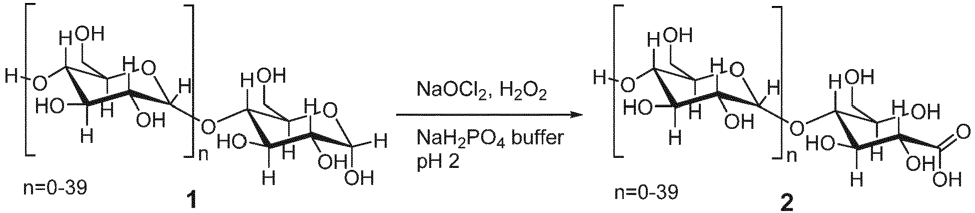

To a solution of 20 g of maltodextrin **1** (Glucidex 12D, Roquette) in 40 mL of water were added 6 mL of 0.67M NaH₂PO₄ buffer (1.6 g of NaH₂PO₄ was dissolved in 20 mL of water and the pH value was adjusted to 2 with 2M HCl) and 1.55 mL of 30% hydrogen peroxide. The reaction mixture was cooled to 5 °C and 1.72 g of NaClO₂ in 20 mL of water was slowly added. The reaction mixture was warmed up to 40 °C and stirred for 25 hours. Oxidation is very selective for C1 position, which was confirmed by 1 H NMR (>90% conversion). The reaction mixture of the compound of formula **2** was used in the next step without isolation.

### Example 2: Preparation of ferric carboxymaltose

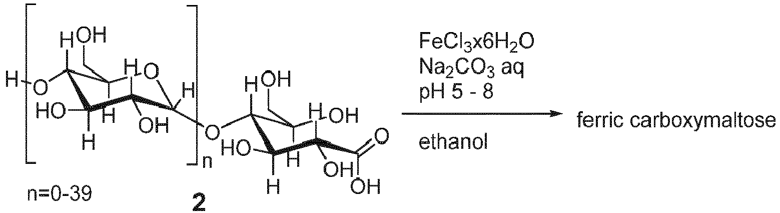

To 0.75M aqueous reaction mixture of FeCl₃x6H₂O and carboxymaltose solution **2** prepared in Example 1 (CMAL/Fe = 140 g/mol) was added aqueous solution of Na₂CO₃ (16%) in 12 hours to pH = 7.3 at 23 °C. After adjustment to pH=6.2, the suspension was slowly heated to 90 °C in 1.5 hours and stirred at target temperature for 30 min. After cooling to 25 °C in one hour, the pH of mixture was adjusted to 6.2 followed by filtration through 0.2 µm filter. 0.9x amount of EtOH to the total volume of reaction mixture was added in 30 min. The precipitated ferric carboxymaltose was separated from solvent by decanting and triturated in EtOH. After filtration, brownish solid ferric carboxymaltose was dried under vacuum. Molecular weight M=202 kDa.

### Example 3: Preparation of ferric carboxymaltose

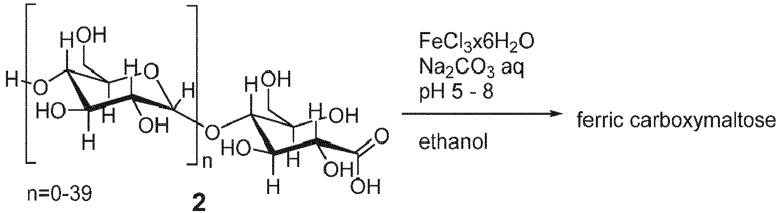

To 0.75M aqueous reaction mixture of FeCl₃x6H₂O and carboxymaltose solution **2** prepared in Example 1 (CMAL/Fe = 140 g/mol) is added aqueous solution of Na₂CO₃ (16%) in 8 hours to pH = 7.3 at 23 °C. After adjustment pH=6.2, the suspension is slowly heated to 90 °C in 1.5 hours and stirred at target temperature for 30 min. After cooling to 25 °C in one hour, the pH of mixture is adjusted to 6.2 followed by filtration through 0.2 µm filter. 0.9x amount of EtOH to the total volume of reaction mixture is added in 30 min. The precipitated ferric carboxymaltose is separated from solvent by decanting and triturated in EtOH. After filtration, brownish solid Ferric carboxymaltose is dried under vacuum. Molecular weight M=150 kDa.

## Claims

1. A process for the preparation of a water soluble iron (III) carboxymaltose complex, the process comprising the steps of:
(a) providing an aqueous solution of one or more maltodextrins of formula **1** 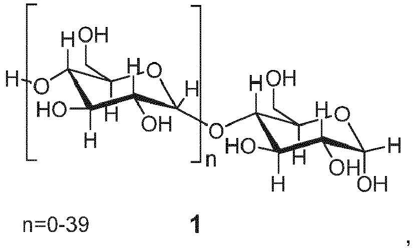 wherein the dextrose equivalent of the maltodextrin or of the mixture of the maltodextrins lies between 5 and 20,
(b) oxidizing the obtained aqueous maltodextrin solution at pH value from 2 to 3.5 with sodium chlorite and hydrogen peroxide to obtain an aqueous solution of a C1-carboxylated maltodextrin of formula **2** 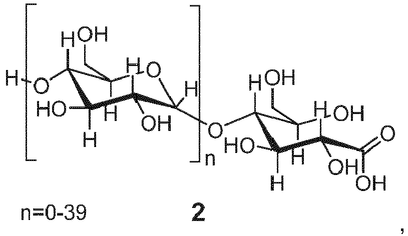
(c) contacting the obtained C1-carboxylated maltodextrin of formula **2** with an aqueous solution of an iron (III) salt,
(d) raising the pH value of the C1-carboxylated maltodextrin solution and iron (III) salt to a value in the range of 5 to 8, and
(e) adding an anti-solvent to obtain a water soluble iron (III) carboxymaltose complex.

2. The process according to claim 1, wherein the dextrose equivalent of the maltodextrin or of the mixture of the maltodextrins provided for the aqueous solution in step (a) lies between 10 and 15.

3. The process according to claim 1, wherein the C1-carboxylated maltodextrin of formula **2** is not isolated.

4. The process according to claim 1, wherein step (b) is carried out in the presence of buffer selected from a group consisting of NaH₂PO₄, citrate, tartrate and glycine buffer.

5. The process according to claim 1, wherein step (b) is carried out at pH value of 2 and the buffer is NaH₂PO₄.

6. The process according to claim 1, wherein step (b) is carried out at a temperature of from 20°C to 50°C.

7. The process according to claim 1, wherein the iron (III) salt in step (c) is iron (III) chloride.

8. The process according to claim 1, wherein in step (d) Na₂CO₃ is added.

9. The process according to claim 1, wherein the anti-solvent in step (e) is ethanol.

10. A process for the preparation of a pharmaceutical composition comprising a water soluble iron (III) carboxymaltose complex, the process comprising the steps of:
(x) preparing the water soluble iron (III) carboxymaltose complex by carrying out the process according to any of claims 1 to 9, and
(y) mixing said obtained water soluble iron (III) carboxymaltose complex with water and optionally with pharmaceutically acceptable additives.
